# EUROPÄISCHE PATENTANMELDUNG

(11) **EP 1 800 951 A1**
(43) Veröffentlichungstag der Anmeldung: **27.06.2007**
(21) Anmeldenummer: 06124295.4
(22) Anmeldetag: 17.11.2006
(51) Int. Cl.: B60R 1/00, B60R 1/12, B60Q 1/48, H01R 13/15, H01R 13/22

(54) **Vorrichtung zur Übertragung von Datensignalen zwischen einer Kamera und einem Steuergerät in einem Kraftfahrzeug und Kraftfahrzeug mit einer derartigen Vorrichtung**

(30) Priorität: 22.12.2005 DE 102005061400
(71) Anmelder: ROBERT BOSCH GMBH, 70442 Stuttgart (DE)
(72) Erfinder: Gottwald, Frank, 71287, Weissach (DE); Seger, Ulrich, 71229, Warmbronn (DE)

(57) **Zusammenfassung**

Es wird eine Vorrichtung zur Übertragung von Datensignalen in einem Kraftfahrzeug mit einer in der Heckklappe (1) angeordneten Kamera (3), einem im Fahrzeugdach (2) angeordneten Steuergerät (4) und einer Datenübertragungsleitung (8) vorgeschlagen. Die Datensignale werden über die Datenübertragungsleitung (8) drahtgebunden zwischen der Kamera (3) und dem Steuergerät (4) übertragen. In der Datenübertragungsleitung (8) ist im Übergangsbereich (10) zwischen der Heckklappe (1) und dem Fahrzeugdach (2) ein Kontaktverbinder (6) angeordnet.

## Beschreibung

### Stand der Technik

Die Erfindung betrifft eine Vorrichtung zur Übertragung von Datensignalen in einem Kraftfahrzeug.

Aus der deutschen Offenlegungsschrift DE 198 41 915 A1 ist ein elektronisch unterstütztes Rückwärtsfahrsystem für Kraftfahrzeuge mit einer eine rückwärtige Fahrstrecke aufnehmende Kamera, einem Steuergerät und einer Anzeigeeinheit bekannt, wobei die Kamera an der Rückseite des Kraftfahrzeuges angebracht ist. Das von der Kamera aufgenommene Bild wird von dem Steuergerät elektronisch gespiegelt und an der Anzeigeeinheit seitenverkehrt angezeigt.

Ferner ist aus der deutschen Offenlegungsschrift DE 100 10 434 A1 eine Kamera für ein Kraftfahrzeug bekannt. Die Kamera ist an der dritten Bremswarnleuchte in der Heckklappe des Kraftfahrzeuges angeordnet.

Unter Umständen ist es aus Platzgründen notwendig, die Kamera vom Steuergerät abgesetzt anzuordnen. Anderseits sollte die Datenübertragungsleitung zwischen der Kamera und dem Steuergerät idealerweise aus einem ununterbrochenem Kabel bestehen. Die Vorteile des ununterbrochenen Kabel sind zum einen der Preis, da keine zusätzlichen Steckverbindungen notwendig sind, und zum anderen die Vermeidung von Stoßstellen, da Stoßstellen die Signalstärke reduzieren und einen Teil der Leistung wieder zurück zum Sender reflektieren. Nachteil des ununterbrochenen Kabels ist die in Frage gestellte hohe Biegefähigkeit der Datenübertragungsleitung an beweglichen Teilen, da beispielsweise das ununterbrochene Kabel an einer Heckklappe eines Kraftfahrzeuges an einer Stelle bis zu 50.000 Biegungen ohne Ausfall widerstehen muss. Zur Übertragung von Videosignalen sind 10-adrige LVDS-Kabel (LVDS=Low voltage differential signaling) geeignet, die paarweise verdrillt sind. Diese weisen aufgrund Ihres Aufbaus einen optimierten Wellenwiderstand für die elektromagnetische Welle bzw. das Datensignal auf. Gleichzeitig trägt die hohe Adernzahl zur Reduktion der Datenmenge pro Leitungspaar bei. Allerdings sind LVDS-Kabel dicke rundliche Kabel, die eine hohe Biegesteifigkeit aufweisen. Weniger biegesteif sind Kabel mit weniger Adern, wie beispielsweise 4-adrige USB-Kabel (USB= Universal Serial Bus). Da durch die verringerte Adernzahl die Datenraten pro Adernpaar höher sind, sind hohe Forderungen an die Schirmung zu stellen, um die elektromagnetische Verträglichkeit (EMV) und die elektromagnetische Verträglichkeit zur Umwelt (EMVU) zu gewährleisten. Glasfaserkabel weisen den Nachteil von hohen Kosten auf. Ferner halten Glasfaserkabel den mechanischen Anforderungen an Biegestellen nicht Stand.

### Offenbarung der Erfindung

### Vorteile der Erfindung

Die nachfolgend beschriebene Vorrichtung zur Übertragung von Datensignalen in einem Kraftfahrzeug mit den Merkmalen des unabhängigen Anspruchs hat den Vorteil, dass an Übergangsbereichen zu beweglichen Teilen des Kraftfahrzeugs der Aufbau mechanisch robust ist und die Datensignale über die gesamte Lebensdauer des Kraftfahrzeuges zuverlässig und fehlerfrei zwischen der Kamera und dem Steuergerät übertragen werden.

Besonders vorteilhaft ist, dass die lösbare elektrische Verbindungsvorrichtung derart gestaltet und im Übergangsbereich angeordnet ist, dass die Verbindungsvorrichtung die Datenverbindung zwischen Kamera und Steuergerät unterbricht, falls das relativ zum Kraftfahrzeug beweglich angeordnete Teil geöffnet ist, da im allgemeinen die Funktionsfähigkeit der Kamera nicht mehr gegeben ist, falls das beweglich angeordnete Teil geöffnet ist, da durch das Öffnen beispielsweise die Ausrichtung der Kamera verändert wird.

Die karosserieseitige Anordnung des Steuergerätes im unmittelbaren Bereich der lösbaren elektrischen Verbindungsvorrichtung ist hinsichtlich von eventuell auftretenden Reflexionen an der elektrischen Verbindungsvorrichtung vorteilhaft, da durch diese geschickte Anordnung große Kabellängen und insbesondere teure Steckverbindungen vermieden werden. Besonders vorteilhaft ist hierbei, das Steuergerät als Repeater auszuführen. Insbesondere ist es vorteilhaft, dass das Steuergerät mit der elektrischen Verbindungsvorrichtung ohne eine Steckverbindung fest verdrahtet ist, da sich dies hinsichtlich von Reflexionen vorteilhaft auswirkt. Durch die Vermeidung von Steckverbindungen trägt die feste Verdrahtung des Steuergerätes mit der elektrischen Verbindungsvorrichtung zu geringen Kosten der Vorrichtung bei.

Ferner ist es vorteilhaft, eine lösbare Steckverbindung in der Datenübertragungsleitung vorzusehen, wobei die Steckverbindung zwischen der Kamera und der elektrischen Verbindungsvorrichtung im beweglich angeordneten Teil angeordnet ist. Die Wartungsfreundlichkeit der Vorrichtung wird erhöht, da die Kamera im Reparaturfall einfach an der Steckverbindung ausgesteckt und durch eine neue Kamera ersetzt werden kann ohne die Verbindungsvorrichtung oder gar das Steuergerät ersetzen zu müssen.

Besonders vorteilhaft ist die nachfolgend beschriebene Vorrichtung bei einer Kamera die in der Heckklappe und/oder dem Kofferraumdeckel des Kraftfahrzeuges angeordnet ist, da Heckklappen bzw. Kofferraumdeckel häufig geöffnet werden müssen.

Vorteilhaft ist ferner, wenn das relativ zum Kraftfahrzeug fest angeordnete Karosserieteil das Fahrzeugdach des Kraftfahrzeuges ist, da dies ein bevorzugter Ort der Anbringung der elektrischen Verbindungsvorrichtung darstellt. Am Übergangsbereich Heckklappe zum Fahrzeugdach treten im Vergleich zu anderen Anbringungsorten die geringsten mechanischen Belastungen auf. Ferner ist der Übergangsbereich Heckklappe zum Fahrzeugdach wenig empfindlich gegenüber Verschmutzungen der lösbaren elektrischen Verbindungsvorrichtung.

Besonders vorteilhaft ist ein Kraftfahrzeug, insbesondere ein Personenkraftwagen oder ein Lastkraftwagen, mit der nachfolgend beschriebenen Vorrichtung zur Übertragung von Datensignalen.

Weitere Vorteile ergeben sich aus der nachfolgenden Beschreibung von Ausführungsbeispielen mit Bezug auf die Figuren und aus den abhängigen Ansprüchen.

### Zeichnung

Die Erfindung wird nachstehend anhand der in der Zeichnung dargestellten Ausführungsformen näher erläutert.

### Es zeigen:

- Figur 1 ein Blockdiagramm des bevorzugten Ausführungsbeispiels,
- Figur 2 die Anordnung der Vorrichtung in einem Kraftfahrzeug des bevorzugten Ausführungsbeispiels,
- Figur 3 einen Bildausschnitt der Figur 2,
- Figur 4 eine Aufsicht auf den Stecker der elektrischen Verbindungsvorrichtung.

### Beschreibung von Ausführungsbeispielen

Nachfolgend wird eine Vorrichtung zur Übertragung von Datensignalen in einem Kraftfahrzeug mit einer in der Heckklappe angeordneten Kamera, einem im Fahrzeugdach angeordneten Steuergerät und einer Datenübertragungsleitung beschrieben. Die Datensignale werden über die Datenübertragungsleitung drahtgebunden zwischen der Kamera und dem Steuergerät übertragen. In der Datenübertragungsleitung ist im Übergangsbereich zwischen der Heckklappe und dem Fahrzeugdach ein Kontaktverbinder angeordnet.

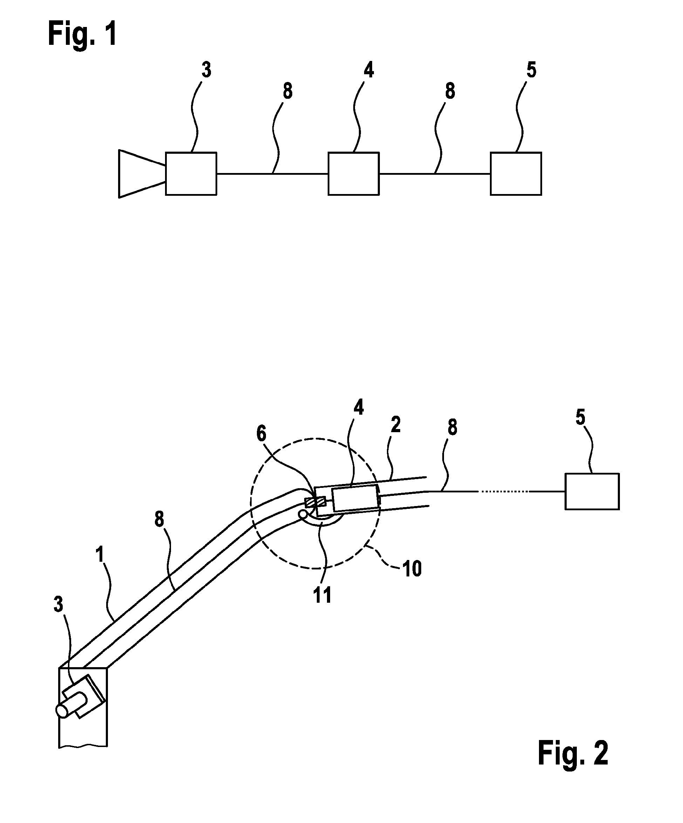

Figur 1 zeigt ein Blockdiagramm des bevorzugten Ausführungsbeispiels, bestehend aus einer Kamera 3 und einem Steuergerät 4. Die Kamera 3 ist über eine Datenübertragungsleitung 8 mit dem Steuergerät 4 verbunden. Die Datenübertragungsleitung 8 ist im bevorzugten Ausführungsbeispiel ein 10-adriges LVDS-Kabel. Die Kamera 3 überträgt Videosignale als Datensignale zum Steuergerät 4, während vom Steuergerät 4 Steuersignale als Datensignale zur Kamera 3 übertragen werden. Im bevorzugten Ausführungsbeispiel handelt es sich bei der Kamera 3 um eine Rückfahrkamera, die Bilder vom rückwärtigen Fahrraum des Kraftfahrzeuges bereitstellt. Die Kamera 3 besteht aus einem CMOS- oder einem CCD-Bildsensor und einer Sende- und Empfangseinrichtung zum Senden und Empfangen der Datensignale. Ferner ist das Steuergerät 4 über eine weitere Datenübertragungsleitung 8 mit einer Anzeigeeinheit 5 verbunden. Bei der Anzeigeeinheit 5 handelt es sich im bevorzugten Ausführungsbeispiel um eine Bildschirm. Alternativ oder zusätzlich ist ein Head-up-Display und/oder eine optische und/oder akustische und/oder haptische Warneinrichtung vorgesehen. Das Steuergerät 4 ist ferner über weitere Leitungen an den CAN-Bus und das Energieversorgungssystem des Kraftfahrzeuges angeschlossen.

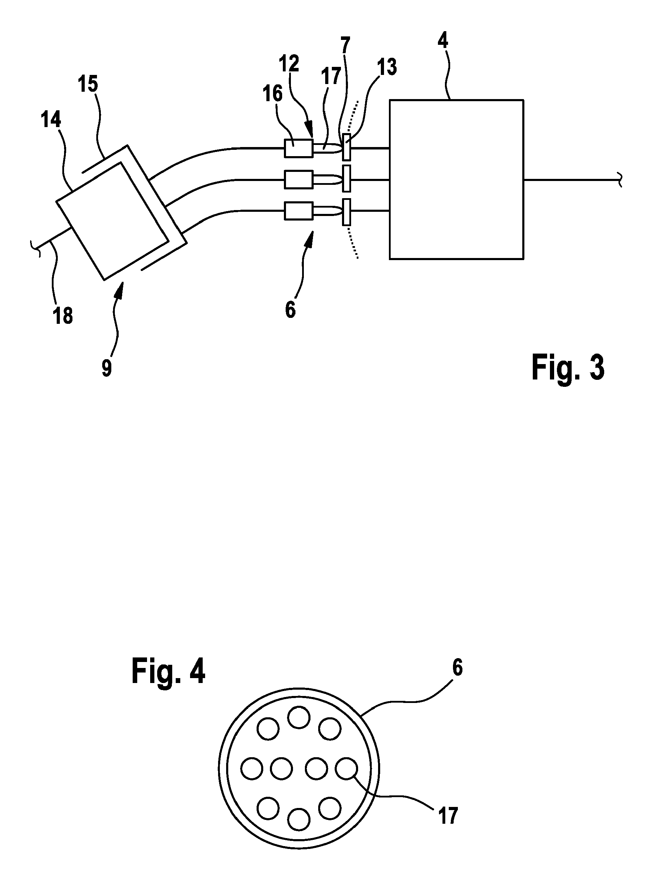

Figur 2 zeigt die Anordnung der Vorrichtung in einem Kraftfahrzeug des bevorzugten Ausführungsbeispiels. Die Kamera 3 befindet sich in der Heckklappe 1 des Kraftfahrzeuges. Im bevorzugten Ausführungsbeispiel ist die Kamera 3 direkt über dem Nummernschild angeordnet. Die Heckklappe 1 ist ein relativ zum Kraftfahrzeug beweglich angeordnetes Teil, wobei die Heckklappe 1 während der Lebensdauer des Kraftfahrzeuges bis zu 50.000 mal bewegt wird. Das zugehörige Steuergerät 4 befindet sich an einem anderen Ort außerhalb der Heckklappe 1 im Fahrzeugdach 2. Als Verbindungsmedium zwischen der Kamera 3 und dem Steuergerät 4 ist eine leitungsgebundene Verbindung bestehend aus einer Datenübertragungsleitung 8 und einer lösbaren elektrischen Verbindungsvorrichtung 6 vorgesehen. Das Steuergerät 4 ist ferner über eine weitere Datenübertragungsleitung 8 mit der Anzeigeeinheit 5 verbunden. Die Heckklappe 1 des Kraftfahrzeuges ist über zwei Scharniere 11 mit dem Fahrzeugdach 2 als relativ zum Kraftfahrzeug fest angeordnetes Karosserieteil verbunden, wobei in Figur 2 lediglich ein Scharnier 11 schematisch eingezeichnet ist. Die lösbare elektrische Verbindungsvorrichtung 6 ist im Übergangsbereich zwischen der Heckklappe 1 und dem Fahrzeugdach 2 angeordnet. Im bevorzugten Ausführungsbeispiel ist die lösbare elektrische Verbindungsvorrichtung 6 ferner im Bereich eines der beiden Scharniere 11 angeordnet, wobei dieser Montageort nicht zwingend notwendig ist, aber zu bevorzugen ist, da der Montageort der lösbaren elektrischen Verbindungsvorrichtung 6 die Anforderungen Schmutzfreiheit und/oder geringe mechanische Belastungen erfüllen sollte. Der mit 10 gekennzeichnete Bereich markiert den in Figur 3 vergrößert dargestellten Bildausschnitt um die elektrische Verbindungsvorrichtung 6.

Figur 3 zeigt einen Bildausschnitt der Figur 2 um die elektrische Verbindungsvorrichtung 6. Bei der elektrischen Verbindungsvorrichtung 6 handelt es sich um einen impedanzoptimierten Kontaktverbinder. Kontaktverbinder werden auch als Druckkontakte bezeichnet. Der Kontaktverbinder zeichnet sich dadurch aus, dass ein berührender Kontakt, vorzugsweise kraftloser berührender Kontakt, durch eine anliegende galvanisch leitende Verbindung hergestellt wird, ohne dass eine Steckkraft notwendig ist. In der Hochfrequenztechnik sind Diskontinuitäten oder Störstellen in der Übertragungsstrecke schädlich für eine verlustfreie Übertragung. Da der Kontaktverbinder einen anderen Aufbau als das angeschlossene Übertragungskabel aufweist, ist im Kontaktverbinder zwischen dem Kabel und den Kontakten ein Übergangsnetzwerk angeordnet. Das Übergangsnetzwerk ist an das verwendete Kabel und den Kontaktverbinder derart angepasst und ausgelegt, dass eine verlustfreie Übertragung gewährleistet ist. Der Kontaktverbinder besteht aus 10 Kontaktelementen, die jeweils von einem Stecker 12 und einer Buchse 13 gebildet werden. Der Stecker 12 besteht aus einem Gehäuse 16 in dem ein Kontaktstift 17 und eine Spiralfeder angeordnet sind. Die Spiralfeder drückt den Kontaktstrift 17 aus dem Gehäuse 16 heraus, so dass der Kontaktstift 17 im geöffneten Zustand der Heckklappe aus dem Gehäuse 16 heraussteht. Bei geöffneter Heckklappe wird der Stecker 12 von der Buchse 13 entfernt und die elektrische Verbindung zwischen der Kamera und dem Steuergerät 4 ist unterbrochen. Im geschlossenen Zustand der Heckklappe wird der Stecker 12 der Buchse 13 angenähert und die Kontaktstifte 17 des Steckers 12 werden durch die Federwirkung der Spiralfeder auf die gegenüberliegend angeordneten Gegenkontakte der Buchse 13 gedrückt. Damit ist die elektrische Verbindung zwischen Kamera und Steuergerät 4 über die Kontaktstelle 7 hergestellt. Im bevorzugten Ausführungsbeispiel ist das Steuergerät 4 im unmittelbaren Bereich der elektrischen Verbindungsvorrichtung 6 im Fahrzeugdach angeordnet. Ferner ist zur Reduzierung von Reflexionen im bevorzugten Beispiel das Steuergerät 4 mit der Buchse 13 der elektrischen Verbindungsvorrichtung 6 fest verdrahtet. Figur 3 zeigt ferner eine lösbare elektrische Steckverbindung 9. Bei dieser elektrischen Steckverbindung 9 handelt es sich um einen aus einem Stecker 14 und einer Buchse 15 bestehende elektrische Verbindung. Die elektrische Steckverbindung 9 ist im bevorzugten Ausführungsbeispiel in der Heckklappe unmittelbar angrenzend an die elektrische Verbindungsvorrichtung 6 angeordnet, wobei die Buchse 15 der Steckverbindung 9 mit den Kontaktstiften 17 der elektrischen Verbindungsvorrichtung 6 fest verdrahtet ist. Im bevorzugten Ausführungsbeispiel befindet sich an der Kamera ein Kabelschwanz 18 der Datenübertragungsleitung mit einem Stecker 14 der Steckverbindung 9. Der Stecker 14 wird während der Montage der Kamera in die Buchse 15 eingesteckt. Alternativ ist vorgesehen, eine Buchse anstatt des Steckers 14 am Kabelschwanz der Kamera anzuordnen und ein Stecker anstatt der Buchse 15 mit der elektrischen Verbindungsvorrichtung 6 zu verbinden.

Figur 4 zeigt eine Aufsicht auf den Stecker der elektrische Verbindungsvorrichtung 6. Der Stecker der elektrischen Verbindungsvorrichtung 6 ist kreisrund ausgeführt. Im Zentrum der elektrischen Verbindungsvorrichtung 6 befinden sind zwei der insgesamt 10 Kontaktstifte 17 des Steckers. Um die zwei mittig angeordneten Kontaktstifte 17 sind die übrigen acht Kontaktstifte 17 konzentrisch angeordnet.

In einer Variante des bevorzugten Ausführungsbeispiels ist das Steuergerät als Repeater zur Verbesserung einer nicht ausreichenden Übertragungsgüte der Videosignale oder der Datensignale ausgeführt. Der Repeater ist ein Signalaufbereiter, indem der Repeater verzerrte Signale aufbereitet. Die Verzerrung der Signale entsteht beispielsweise durch zu lange Kabel. Der Repeater entzerrt das empfangene Signal und leitet es nach Aufbereitung vorzugsweise im Urzustand an den nächsten Kabelabschnitt weiter.

Ferner ist in einer weiteren Variante des bevorzugten Ausführungsbeispiels die Kamera im Kofferraumdeckel und/oder einer Tür, insbesondere der Fahrer- oder Beifahrertür, und/oder in der Motorhaube des Kraftfahrzeuges angeordnet. Bei der Anordnung in einer vorderen Tür ist die elektrische Verbindungsvorrichtung vorzugsweise im Übergangsbereich zwischen der Tür und dem Kotflügel als fest angeordnetes Karosserieteil angeordnet.

## Patentansprüche

1. Vorrichtung zur Übertragung von Datensignalen in einem Kraftfahrzeug, mit einer Kamera (3), einem Steuergerät (4) und einer Datenübertragungsleitung (8), wobei die Datensignale über die Datenübertragungsleitung (8) drahtgebunden zwischen der Kamera (3) und dem Steuergerät (4) übertragen werden,
**gekennzeichnet durch**
eine lösbare elektrische Verbindungsvorrichtung (6), die in der Datenübertragungsleitung (8) zwischen der Kamera (3) und dem Steuergerät (4) in einem Übergangsbereich zwischen einem relativ zum Kraftfahrzeug beweglich angeordneten Teil (1) des Kraftfahrzeuges und einem relativ zum Kraftfahrzeug fest angeordneten Karosserieteil (2) des Kraftfahrzeugs angeordnet ist.

2. Vorrichtung nach Anspruch 1, **dadurch gekennzeichnet, dass** die lösbare elektrische Verbindungsvorrichtung (6) derart gestaltet und im Übergangsbereich angeordnet ist, dass die Verbindungsvorrichtung (6) eine Datenverbindung der Kamera (3) mit dem Steuergerät (4) dann bewirkt, falls das beweglich angeordnete Teil (1) geschlossen ist und die Datenverbindung zwischen Kamera (3) und Steuergerät (4) unterbricht, falls das beweglich angeordnete Teil (1) geöffnet ist.

3. Vorrichtung nach einem der vorhergehenden Ansprüche, **dadurch gekennzeichnet, dass** das Steuergerät (4) im unmittelbaren Bereich der lösbaren elektrischen Verbindungsvorrichtung (6) im fest angeordneten Karosserieteil (2) angeordnet ist.

4. Vorrichtung nach Anspruch 3, **dadurch gekennzeichnet, dass** das Steuergerät (4) mit der lösbaren elektrischen Verbindungsvorrichtung (6) fest verdrahtet ist.

5. Vorrichtung nach einem der vorhergehenden Ansprüche, **gekennzeichnet durch** eine lösbare elektrische Steckverbindung (9) in der Datenübertragungsleitung (8), wobei die Steckverbindung (9) zwischen der Kamera (3) und der lösbaren elektrischen Verbindungsvorrichtung (6) im beweglich angeordneten Teil (1) angeordnet ist.

6. Vorrichtung nach Anspruch 5, **dadurch gekennzeichnet, dass** die lösbare elektrische Steckverbindung (9) im unmittelbaren Bereich der lösbaren elektrischen Verbindungsvorrichtung (6) angeordnet ist.

7. Vorrichtung nach einem der Ansprüche 5 oder 6, **dadurch gekennzeichnet, dass** die lösbare elektrische Steckverbindung (9) einen Stecker (14) und eine Buchse (15) aufweist, wobei der Stecker (14) oder die Buchse (15) mit der lösbaren elektrischen Verbindungsvorrichtung fest verdrahtet ist.

8. Vorrichtung nach Anspruch 7, **dadurch gekennzeichnet, dass** die Kamera (3) mit dem Stecker (14) oder der Buchse (15) der lösbaren elektrischen Steckverbindung (9) über die Datenübertragungsleitung (8) fest verdrahtet ist.

9. Vorrichtung nach einem der vorhergehenden Ansprüche, **dadurch gekennzeichnet, dass** das beweglich angeordnete Teil (1) eine Heckklappe und/oder ein Kofferraumdeckel und/oder eine Tür und/oder eine Motorhaube des Kraftfahrzeugs ist.

10. Vorrichtung nach einem der vorhergehenden Ansprüche, **dadurch gekennzeichnet, dass** das Karosserieteil (2) ein Fahrzeugdach und/oder ein Kotflügel des Kraftfahrzeuges ist.

11. Kraftfahrzeug mit einem relativ zum Kraftfahrzeug beweglich angeordneten Teil (1), insbesondere einer Heckklappe und/oder einem Kofferraumdeckel und/oder einer Tür und/oder einer Motorhaube, und mit einem relativ zum Kraftfahrzeug fest angeordneten Karosserieteil (2), insbesondere einem Fahrzeugdach und/oder einem Kotflügel,
**gekennzeichnet durch**
eine Vorrichtung nach einem der vorhergehenden Ansprüche.

12. Kraftfahrzeug nach Anspruch 11, **dadurch gekennzeichnet, dass** das beweglich angeordnete Teil (1) mit einem Scharnier (11) mit dem fest angeordneten Karosserieteil (2) verbunden ist, wobei die lösbare elektrische Verbindungsvorrichtung (6) im Bereich des Scharniers (11) angeordnet ist.
